# FASCICULE DE BREVET EUROPEEN

(11) **EP 3 574 558 B1**
(45) Date de publication et mention de la délivrance du brevet: **17.03.2021**
(21) Numéro de dépôt: 17838048.1
(22) Date de dépôt: 20.12.2017
(51) Int. Cl.: H02G 3/32, B60R 16/02, H01M 2/20

(54) **ENSEMBLE DE BATTERIES AVEC SYSTÈME DE FIXATION DE CÂBLES SUR UNE BARRE CONDUCTRICE RIGIDE**
BATTERIESET MIT SYSTEM ZUR BEFESTIGUNG VON KABELN AUF EINER STARREN LEITFÄHIGEN STANGE
BATTERY SET WITH SYSTEM FOR SECURING CABLES ON A RIGID CONDUCTIVE BAR

(30) Priorité: 30.01.2017 FR 1750708
(43) Date de publication de la demande: 04.12.2019
(73) Titulaire: PSA Automobiles SA, 78300 Poissy (FR)
(72) Inventeur: FERON, Teddy, 25200 Montbeliard (FR)
(86) Numéro de dépôt international: PCT/FR2017/053741
(87) Numéro de publication internationale: WO 2018/138422

(56) Documents cités:
- EP-A1- 3 002 495
- WO-A1-2015/020208
- JP-U- S63 103 078
- US-A- 3 582 030
- US-A- 4 267 995
- US-A- 4 564 163
- US-A1- 2003 213 876

## Description

La présente invention concerne un système de fixation de câbles sur des barres conductrices de batteries de véhicule automobile électrique ou hybride, l'invention concerne aussi des batteries ainsi que des véhicules électriques ou hybrides, équipés de tels systèmes de fixation.

Les batteries pour la traction de véhicules électriques ou hybrides comportent généralement des barres conductrices rigides de connexion permettant de relier des modules entre eux, ou d'alimenter des connexions extérieures.

Un type de batteries connu, présenté notamment par le document US-A-3582030, comporte des cellules reliées entre elles par des barres conductrices rigides, présentant une section transversale plate. Des systèmes de fixation de câbles souples sur ces barres rigides comportent une boucle de maintien recevant à l'intérieur un ou plusieurs câbles, ainsi que deux pattes venant se clipser de part et d'autre de la section plate de la barre.

On réalise de cette manière un maintien d'un ensemble de câbles sur les batteries, en faisant passer chaque câble dans plusieurs systèmes de fixation successifs.

Toutefois sur les véhicules électriques ou hybrides on peut utiliser des barres conductrices relativement longues pour les connexions des batteries, qui nécessitent d'être maintenues entre leurs extrémités afin d'éviter des vibrations de ces barres. En particulier des barres comportant une section plate peuvent présenter une grande flexibilité dans le sens de l'épaisseur.

Le fonctionnement du véhicule et des machines électriques génère des vibrations qui peuvent exciter les oscillations des barres conductrices, en émettant des bruits. De plus on obtient avec les flexions alternées des barres conductrices un travail en fatigue de ces barres, qui peut entraîner des défaillances.

Il faut donc prévoir dans ce cas des moyens de calage des barres conductrices, qui viennent en plus de systèmes de fixation des câbles souples qui peuvent passer à côté. On obtient plusieurs composants différents qui nécessitent du temps pour les monter, et imposent une gestion de pièces supplémentaires sur les lignes d'assemblage de ces véhicules.

La présente invention a notamment pour but d'éviter ces problèmes de l'art antérieur.

Elle propose à cet effet un ensemble de batteries prévu pour la traction d'un véhicule électrique ou hybride, comportant :
- des batteries,
- des barres conductrices au-dessus des batteries et reliées à ces batteries réalisant des connexions des batteries,
- un couvercle descendant sur les batteries,
- un système de fixation de câbles prévu pour se fixer sur l'une des barres conductrices rigides, ce système comprenant une boucle de maintien prévue pour recevoir au moins un câble, et un dispositif de fixation prévu pour se fixer sur la barre qui est plate, ce dispositif comportant une direction longitudinale et un plan d'appui correspondant respectivement à la direction longitudinale de cette barre, et à une surface d'appui sur le plat de cette barre, cet ensemble de batteries étant remarquable en ce que le système de fixation comporte au moins un élément élastique tourné vers l'extérieur du système de fixation, cet élément présentant une élasticité dans la direction perpendiculaire au plan d'appui et étant comprimé par le couvercle, ou par le dessus d'une des batteries, ou par le couvercle et par le dessus d'une des batteries.

Un avantage de ce système de fixation est qu'avec une seule pièce on réalise en même temps la fixation de câbles sur une barre conductrice rigide, et grâce à l'élément élastique prenant appui sur un élément entourant les batteries, on peut caler la barre dans la direction de son épaisseur pour éviter sa vibration.

On réalise en une seule opération de pose à la fois la fixation de câbles et le calage de la barre conductrice, ce qui permet de réduire les coûts. De plus on gère un unique composant formé par le système de fixation, ce qui simplifie cette gestion.

L'ensemble de batteries selon l'invention peut de plus comporter une ou plusieurs des caractéristiques suivantes, qui peuvent être combinées entre elles :
avantageusement, le système de fixation comporte deux éléments élastiques disposés sur deux côtés opposés de ce système de fixation.

Avantageusement, un élément élastique forme une languette comportant une extrémité inclinée par rapport au plan d'appui, permettant de lui appliquer dans ce plan une force perpendiculaire à la direction longitudinale.

Avantageusement, le système de fixation comporte une embase formant un profilé comprenant deux faces d'appui perpendiculaires prévues pour venir sur le plat et l'épaisseur de la barre.

Dans ce cas, avantageusement dans la direction longitudinale, l'embase dépasse de chaque côté de la boucle de maintien.

Avantageusement, la boucle de maintien est formée par deux bras sensiblement parallèles, disposés dans le plan d'appui, perpendiculairement à la direction longitudinale.

Dans ce cas, avantageusement l'extrémité des bras comporte des pentes dirigeant le câble entre ces deux bras lors de son introduction dans la boucle.

Avantageusement, la boucle de maintien comporte des lamelles élastiques dirigées vers l'intérieur de cette boucle.

L'invention a de plus pour objet un véhicule automobile électrique ou hybride comprenant un ensemble de batteries de traction tel que précédemment décrit.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- les figures 1 et 2 présentent un système de fixation selon l'invention, vu successivement d'un côté et de l'autre ;
- la figure 3 présente ce système de fixation maintenu sur une barre conductrice, fixant sur cette barre un câble électrique ;
- la figure 4 est une coupe suivant un plan de coupe médian IV-IV de ce système de fixation, présentant son blocage entre des batteries et un couvercle de ces batteries ; et
- la figure 5 présente deux systèmes de fixation espacés, maintenant un même câble sur la barre conductrice.

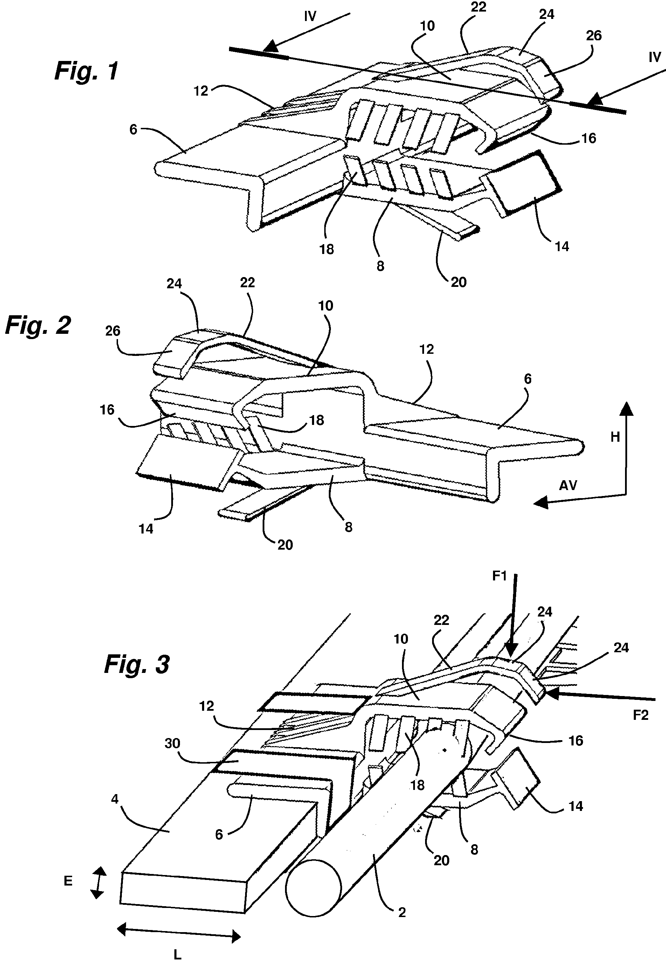

Les figures 1, 2, 3 et 4 présentent un système de fixation maintenu sur une barre conductrice plate 4 s'étendant suivant une direction longitudinale, comprenant une section transversale rectangulaire présentant dans le sens du plat une largeur L, et une épaisseur E petite par rapport à cette largeur.

Par convention figure 2 le côté supérieur du système de fixation est indiqué par la flèche notée « H » disposée dans un sens vertical, et le côté avant par la flèche notée « AV » disposée dans un plan horizontal. Les côtés gauche ou droit du système de fixation sont définis en regardant son côté avant. Dans le véhicule, le système de fixation peut prendre des orientations quelconques.

Le système de fixation comporte une embase 6 s'étendant suivant la direction longitudinale, présentant une section transversale constante formant une cornière à angle droit comprenant un grand côté disposant d'un plan d'appui posé sur le dessus de la barre 4, et un petit côté s'ajustant sur l'épaisseur de la barre du côté avant.

Une boucle de maintien du câble 2 comporte un bras inférieur 8 et un bras supérieur 10 fixés au milieu de l'embase 6, qui s'étendent vers l'avant de cette embase afin de recevoir le câble disposé en avant de la barre 4, parallèlement à cette barre.

Le bras inférieur 8 comporte en partant de l'embase 6 une partie droite disposée dans le plan inférieur de la barre 4, présentant à son extrémité une partie coudée qui remonte légèrement. La partie coudée se termine par une plaque inclinée 14 disposée sensiblement perpendiculairement à cette partie.

Le bras supérieur 10 comporte une partie droite s'étendant vers l'avant, qui est décalée vers le haut par rapport au plan supérieur de la barre 4, après un ressaut renforcé par des nervures triangulaires de renforcement 12 venant sur le dessus de l'embase 6.

L'extrémité de la partie droite du bras supérieur 10 présente une partie coudée qui descend légèrement, se terminant par un retour incliné 16 tourné vers le bas et vers l'arrière, formant un crochet.

L'introduction du câble 2 dans la boucle du système de fixation se fait en pressant ce câble vers l'arrière sur les extrémités des bras 8, 10, de manière à appuyer à la fois sur la plaque inclinée 14 et sur le retour incliné 16, ce qui les écartent l'un de l'autre grâce à leurs inclinaisons, et ouvre ces bras par déformation élastique afin de permettre l'engagement du câble dans la boucle.

Une fois mis en place dans la boucle, le câble 2 est maintenu par le retour incliné 16 formant un crochet qui l'empêche de sortir de cette boucle sans intervention d'un opérateur. On assure ainsi la sécurité du montage du câble 2.

Les côtés gauches des deux bras 8, 10 présentent chacun quatre lamelles élastique 18 tournées vers l'intérieur de la boucle, et s'écartant légèrement vers la gauche. Grâce à leurs inclinaisons vers la gauche, les lamelles élastiques 18 s'écartent de ce côté quand le câble 2 est introduit dans la boucle, et maintiennent une légère pression sur ce câble en permanence.

De cette manière on réalise une limitation du mouvement du câble 2 dans la boucle, évitant des vibrations qui pourraient entraîner une usure et des bruits.

La figure 3 présente deux serrages 30 formés chacun par une bande de ruban adhésif enroulée autour de l'embase 6 et de la barre 4 de chaque côté de la boucle formée par les bras 8, 10. Après avoir ajusté l'embase 6 sur la barre 4, un opérateur forme rapidement les deux serrages 30 en enroulant le ruban adhésif autour, ce qui constitue un moyen de fixation rapide et économique en un endroit quelconque de la barre 4, sans avoir à la percer ni à la modifier.

Le bras inférieur 8 comporte en dessous une languette élastique inférieure 20 rectiligne tournée vers l'extérieur de la boucle, partant de la base de ce bras, et s'écartant de ce bras vers l'avant.

Le bras supérieur 10 comporte au-dessus une languette élastique supérieure 22 tournée vers l'extérieur de la boucle, comportant une première partie rectiligne partant de la base de ce bras, et s'écartant de ce bras vers l'avant. La languette supérieure 22 comporte ensuite après un premier pli une deuxième partie rectiligne horizontale 24, et enfin après un deuxième pli une troisième partie rectiligne inclinée vers le bas 26, formant un angle d'environ 45° avec cette deuxième partie rectiligne.

La deuxième partie rectiligne 24 peut recevoir une force F1 venant du dessus, qui tend à déformer vers le bas la languette supérieure 22. La troisième partie rectiligne 26 peut recevoir une force F2 venant de l'avant, qui tend aussi à déformer vers le bas la languette supérieure 22 grâce à l'inclinaison de cette troisième partie recevant la force.

On notera que la barre 4 présente une grande flexibilité dans le sens de son épaisseur E, et une grande raideur dans le sens de sa largeur L.

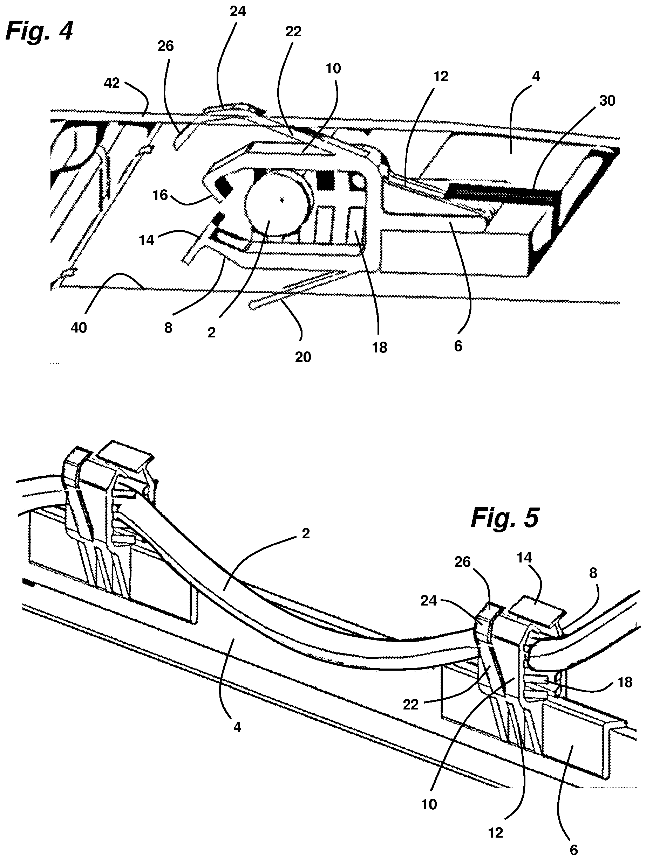

La figure 4 présente le système de fixation installé horizontalement sur une barre 4 venant à plat au-dessus de batteries 40. La déformation élastique des languettes 20, 22 n'est pas présentée sur cette figure.

La languette élastique inférieure 20 est comprimée sur le dessus des batteries 40, ce qui forme un calage du système de fixation vers le bas.

Lors de la descente d'un couvercle 42 sur les batteries, ce couvercle vient comprimer la languette élastique supérieure 22 ce qui forme un calage du système de fixation vers le haut. Le système de fixation est ainsi maintenu entre les batteries 40 et le couvercle 42, ce qui cale à la fois le câble 2 et la barre 4 en évitant leurs vibrations.

On notera que le couvercle peut se fermer en appuyant sur la languette élastique supérieure 22 par un mouvement venant de l'avant grâce à sa troisième partie rectiligne 26 inclinée, ou par un mouvement suivant un angle quelconque entre l'avant et le dessus, qui contribuerait aussi à comprimer cette languette et à caler le système de fixation.

La figure 5 présente deux systèmes de fixation écartés, maintenant le câble 2 en avant de la barre 4. La distance entre ces deux systèmes de fixation est à ajuster pour obtenir à la fois un maintien suffisant du câble 2 et de la barre 4 dans toutes les directions.

On peut en particulier disposer un système de fixation sur une position quelconque de la barre 4, sans effectuer de préparation de cette barre. Avantageusement les systèmes de fixation sont réalisés en une pièce par un moulage d'une matière plastique, qui permet de réaliser de manière économique en une seule opération de moulage des formes complexes.

Selon un mode de construction du véhicule, les systèmes de fixation peuvent être installés sur les barres 4 disposées sur les batteries 40 pendant l'assemblage de l'ensemble de batteries chez un fournisseur. Cet ensemble de batteries est ensuite livré chez le constructeur automobile, qui pose les câbles 2, et les attache ensuite facilement dans les boucles des systèmes de fixation.

## Revendications

1. Ensemble de batteries prévu pour la traction d'un véhicule électrique ou hybride, comprenant :
- des batteries (40),
- des barres conductrices (4) au-dessus des batteries (40) et reliées à ces batteries (40) réalisant des connexions des batteries (40),
- un couvercle (42) descendant sur les batteries (40),
- un système de fixation de câbles (2) prévu pour se fixer sur l'une des barres conductrices rigides (4), ce système comprenant une boucle de maintien prévue pour recevoir au moins un câble (2), et un dispositif de fixation prévu pour se fixer sur la barre (4) qui est plate, ce dispositif comportant une direction longitudinale et un plan d'appui correspondant respectivement à la direction longitudinale de cette barre (4), et à une surface d'appui sur le plat de cette barre (4),
**caractérisé en ce que** le système de fixation comporte au moins un élément élastique (20, 22) tourné vers l'extérieur du système de fixation, cet élément présentant une élasticité dans la direction perpendiculaire au plan d'appui et comprimé par le couvercle, ou par le dessus d'une des batteries, ou par le couvercle et par le dessus d'une des batteries.

2. Ensemble de batteries selon la revendication 1, **caractérisé en ce que** le système de fixation (2) comporte deux éléments élastiques (20, 22) disposés sur deux côtés opposés de ce système de fixation.

3. Ensemble de batteries selon la revendication 1 ou 2, **caractérisé en ce qu'**un élément élastique (22) forme une languette comportant une extrémité inclinée (26) par rapport au plan d'appui, permettant de lui appliquer dans ce plan une force (F2) perpendiculaire à la direction longitudinale.

4. Ensemble de batteries selon l'une quelconque des revendications précédentes, **caractérisé en ce que** le système de fixation de câbles (2) comporte une embase (6) formant un profilé comprenant deux faces d'appui perpendiculaires prévues pour venir sur le plat et l'épaisseur de la barre (4).

5. Ensemble de batteries selon la revendication 4, **caractérisé en ce que** dans la direction longitudinale l'embase (6) dépasse de chaque côté de la boucle de maintien.

6. Ensemble de batteries selon l'une quelconque des revendications précédentes, **caractérisé en ce que** la boucle de maintien est formée par deux bras (8, 10) sensiblement parallèles, disposés dans le plan d'appui, perpendiculairement à la direction longitudinale.

7. Ensemble de batteries selon la revendication 6, **caractérisé en ce que** l'extrémité des bras (8, 10) comporte des pentes (14, 16) dirigeant le câble (2) entre ces deux bras (8, 10) lors de son introduction dans la boucle.

8. Ensemble de batteries selon l'une quelconque des revendications précédentes, **caractérisé en ce que** la boucle de maintien comporte des lamelles élastiques (18) dirigées vers l'intérieur de cette boucle.

9. Véhicule automobile électrique ou hybride comprenant un ensemble de batteries de traction, **caractérisé en ce que** cet ensemble de batteries est selon l'une des revendications précédentes.

## Patentansprüche

1. Batterieanordnung für die Traktion eines Elektro-oder Hybridfahrzeug bestehend aus :
- Batterien (40),
- leitende Stangen (4) über den Batterien (40), die mit diesen Batterien (40) verbunden sind und Verbindungen zu den Batterien (40) herstellen,
- eine Abdeckung (42), die auf die Batterien (40) abfällt,
- ein Kabelbefestigungssystem (2), das zur Befestigung an einer der starren leitenden Stangen (4) ausgelegt ist, wobei dieses System eine Halteschleife zur Aufnahme von mindestens einem Kabel (2) und eine Befestigungsvorrichtung zur Befestigung an der Stange (4), die flach ist, wobei diese Vorrichtung eine Längsrichtung und eine Lagerebene umfasst, die jeweils der Längsrichtung dieser Stange (4) bzw. einer Auflagefläche auf der Ebene dieser Stange (4) entsprechen; **dadurch gekennzeichnet, dass** das Befestigungssystem mindestens ein elastisches Element (20, 22) umfasst, das vom Befestigungssystem nach außen zeigt, wobei dieses Element eine Elastizität in der Richtung senkrecht zur Lagerebene aufweist und durch die Abdeckung oder von der Oberseite eines der Elemente zusammengedrückt wird Batterien oder von der Abdeckung und von der Oberseite einer der Batterien.

2. Batterieanordnung nach Anspruch 1, **dadurch gekennzeichnet,**
**dass** das Befestigungssystem (2) besteht aus zwei elastischen Elementen (20, 22) angeordnet auf zwei gegenüberliegenden Seiten des Befestigungssystemes.

3. Batterieanordnung nach Anspruch 1 oder 2, **dadurch gekennzeichnet, dass** ein elastisches Element (22) einer Zunge comport ant ein geneigtes Ende (2 6) in Bezug auf die Ebene der Unterstützung, um es anzuwenden in dieser Ebene eine Kraft (F2) senkrecht zu der Längsrichtung.

4. Batterieanordnung nach einem der vorhergehenden Ansprüche, **dadurch gekennzeichnet, daß** die Kabelbefestigungssystem (2) umfasst eine Basis (6) ein Profil bilden, umfassend zwei senkrechte Lagerflächen ausgebildet auf der flachen und der Dicke der kommen, Balken (4).

5. Batterieanordnung nach Anspruch 4, **dadurch gekennzeichnet, dass** in der Längsrichtung der Basis (6) steht von jeder Seite der Halteschleife.

6. Batterieanordnung nach einem der vorhergehenden Ansprüche, **gekennzeichnet dadurch, dass** die Halteschleife durch zwei Arme (8, 10) gebildet ist, die im wesentlichen parallel sind und in der Lagerebene senkrecht zur Längsrichtung angeordnet sind.

7. Batterieanordnung nach Anspruch 6, **dadurch gekennzeichnet, dass** das Ende der Arme (8, 10) Steigungen (14, 16) aufweist, die das Kabel (2) zwischen diesen beiden Armen (8, 10) während seiner Einführung in die Schleife.

8. Batterieanordnung nach einem der vorhergehenden Ansprüchen, **dadurch gekennzeichnet, dass** die Rückhalteschleife umfasst elastische Lamellens (18) in Richtung der Innenseite dieser Schleife gerichtet.

9. Kraftfahrzeug- Comp-Elektro- oder Hybrid- Ren- Ant-Satz von Traktionsbatterien, **gekennzeichnet dadurch, dass** die Batteriebaugruppe einem der vorhergehenden Ansprüche entspricht.

## Claims

1. Battery assembly provided for the traction of an electric or hybrid vehicle, comprising :
- the batterys (40),
- the bars conductives (4) above the batterys (40) and connected to these batteries (40) making connections to the batteries (40),
- a cover (42) descending on the batteries (40),
- a cable fixing system (2) designed to be fixed on one of
the bars conductives rigids (4) , the system comp ren ant a retaining loop for receiving at least one cable (2) , and a fastening device provided to be fixed to the bar (4) which is flat, this device comprising a longitudinal direction and a bearing plane corresponding respectively to the longitudinal direction of this bar (4) , and to a bearing surface on the flat of this bar (4) , **characterized in that** the fixing system comprises at least one elastic element (20, 22) facing outwards from the fixing system, this element having elasticity in the
direction perpendicular to a bearing plate and compressed by the cover, or by the top of one of the batteries, or by the cover and the top of one of the batteries .

2. Battery assembly according to claim 1, **characterized in that** the fastening system (2) comprises two elastic elements (20, 22) arranged on two opposite sides of this fastening system.

3. Battery assembly according to claim 1 or 2, **characterized in that** a resilient element (22) forms a tongue comport ant an inclined end (2 6) with respect to the plane of support, to apply it in this plane a force (F2) perpendicular to the longitudinal direction.

4. Battery assembly according to any one of the preceding claims, **characterized in that** e the cable fixing system (2) comprises a base (6) forming a profile comprising two perpendicular bearing surfaces designed to come on the flat and the thickness of the bar (4).

5. Battery assembly according to claim 4, **characterized in that** in the longitudinal direction the base (6) projects from each side of the retaining loop.

6. Battery assembly according to any one of the preceding claims, **characterized in that** the retaining loop is formed by two arms (8, 10) substantially parallel, arranged in the bearing plane, perpendicular to the longitudinal direction.

7. Battery assembly according to claim 6, **characterized in that** the end of the arms (8, 10) has slopes (14, 16) directing the cable (2) between these two arms (8, 10) during its introduction into the loop.

8. Battery assembly according to any one of the preceding claims, **characterized in that** the retaining loop comprises elastic strips (18) directed towards the inside of this loop.

9. Electric or hybrid motor vehicle comprising a set of traction batteries, **characterized in that** this set of batteries is according to one of the preceding claims.
